# EUROPÄISCHE PATENTSCHRIFT

(11) **EP 0 901 861 B1**
(45) Veröffentlichungstag und Bekanntmachung des Hinweises auf die Patenterteilung: **29.10.2008**
(21) Anmeldenummer: 98116710.9
(22) Anmeldetag: 03.09.1998
(51) Int. Cl.: B23B 51/10

(54) **Fliehkraftgesteuertes Senk- und Entgratwerkzeug**
Centrifugally controlled deburring and countersinking tool
Outil d'ébavurage et de chanfreinage à commande centrifuge

(30) Priorität: 10.09.1997 DE 19739621
(43) Veröffentlichungstag der Anmeldung: 17.03.1999
(73) Patentinhaber: Heule, Ulf, 9436 Balgach (CH)
(72) Erfinder: Heule, Heinrich, CH-9434 Au /SG (CH); Lippuner, Werner, CH-9436 Balgach (CH)
(74) Vertreter: Riebling, Peter

(56) Entgegenhaltungen:
- EP-A- 0 231 818
- DE-A- 4 103 190
- DE-A- 4 125 106
- FR-A- 2 369 046
- FR-A- 2 671 995
- US-A- 4 140 432

## Beschreibung

Die Erfindung betrifft ein fliehkraftgesteuertes Senk- und Entgratwerkzeug nach dem Oberbegriff des Patentanspruchs 1 und wie z.B. aus EP-A-0231818 bekannt.

Ein derartiges Senk- und Entgratwerkzeug ist in Form eines sog. Reverserwerkzeuges bekannt geworden, bei dem je nach Drehrichtung des Drehantriebes das Entgratmesser entweder aus dem Schaft des Entgratwerkzeuges ausgefahren ist oder - bei Wechsel der Drehrichtung in den Schaft eingefahren ist.
Unter einem Entgratwerkzeug wird hierbei das Entfernen von Graten an Bohrungsrändern mit diesem Werkzeug verstanden, ohne daß eine wesentliche Veränderung am Bohrungsrand (<1-2mm) stattfindet. Unter dem Begriff Senken wird hingegen eine Veränderung der Geometrie des Bohrungsrandes verstanden.

Die Steuerung des Aus- und Einfahrens des Messers erfolgt hierbei über die Verdrehung des Gehäuses des Entgratwerkzeuges selbst, wobei der Drehantrieb und damit auch die Kraftübertragung nicht über das Gehäuse des Werkzeuges erfolgt, sondern über eine mittig angeordnete und drehangetriebene Stange. Damit besteht aber der Nachteil, daß die gesamte Drehmomentenübertragung für den Antrieb dieses Reverserwerkzeuges über die mittig angeordnete Stand erfolgen muß, was einen relativ komplizierten Aufbau erfordert und im übrigen die Notwendig beinhaltet, die für die Drehmomentenübertragung notwendigen Bauteile relativ groß zu dimensionieren.

Der Erfindung liegt deshalb die Aufgabe zugrunde, ein eingangs bekanntes Reverserwerkzeug so weiterzubilden, daß bei einfachem Aufbau eine Steuerung des Reverserbetriebes über eine Steuerstange entfallen kann und der Aufbau des Reverserwerkzeuges insgesamt einfacher und kostengünstiger ist.

Zur Lösung der gestellten Aufgabe ist die Erfindung durch die technische Lehre des Anspruchs 1 gekennzeichnet.

Wesentliches Merkmal der Erfindung ist, daß nun eine sog. Fliehkraftsteuerung vorgeschlagen wird, so daß die Notwendigkeit entfällt, das Ein- und Ausfahren der Messer durch eine getrennte Antriebsstange vorzusehen. Damit wird der Aufbau einfacher und kostengünstiger.

Ein weiterer Vorteil der Erfindung ist, daß nun ein starres Gehäuse für das Reverserwerkzeug vorgesehen werden kann, welches unmittelbar der Drehmomentenübertragung dient, was beim Stand der Technik nicht der Fall war. Auf diese Weise können somit wesentlich höhere Drehmomenten direkt über das Gehäuse übertragen werden, die vorher über eine zentrale Mittenstange übertragen werden mußten. Um die folgende Beschreibung zu vereinfachen wird davon ausgegangen, daß das Entgratwerkzeug lediglich ein einziges Messer enthält, welches senkrecht zur Drehachse verschiebbar im Schaft des Entgratwerkzeuges angeordnet ist. Selbstverständlich ist die Erfindung hierauf nicht beschränkt; die Erfindung beansprucht sowohl die Anordnung eines Messers, als auch die Anordnung von zwei gegeneinander angeordneten Messern; es sind auch mehr als zwei Messer möglich, die beispielsweise sternförmig im Schaft des Entgratwerkzeuges angeordnet sind und jeweils über eine Wippe oder über mehrere Wippen verschiebbar im Schaft des Entgratwerkzeuges angetrieben sind. Im folgenden wird jedoch lediglich der Vereinfachung wegen von einem einzigen Messer ausgegangen.

Die Fliehkraftsteuerung nach der Erfindung sieht vor, daß mindestens ein im Gehäuse angeordnetes und senkrecht zur Gehäusemittenlängsachse verschiebbares Fliehkraftgewicht vorgesehen ist, dessen radiale Verschiebung im Gehäuse in eine Drehbewegung auf die Wippe umgesetzt wird, welche Wippe fluchtend zur Längsmittenachse drehbar im Gehäuse angeordnet ist. Für die Umsetzung der radialen Verschiebebewegung des Fliehkraftgewichtes in eine Drehbewegung auf die Wippe gibt es mehrere Möglichkeiten. In einer bevorzugten Ausgestaltung der vorliegenden Erfindung ist es vorgesehen, daß eine formschlüssige Führung zwischen dem Fliehkraftgewicht und der Wippe vorhanden ist, welche in der Lage ist, die beschriebene radiale Verschiebebewegung des Fliehkraftgewichtes in eine demgemäße Drehbewegung der Wippe umzusetzen. Bevorzugt wird hierbei eine Zahnstangen-Ritzel-Führung.

Es werden jedoch auch andere formschlüssige Führungen beansprucht, wie z.B. eine Ritzel-Zahnriemenführung oder dergleichen formschlüssige Kupplungen mehr. Im übrigen beansprucht die vorliegende Erfindung sowohl das Vorhandensein eines einzigen Fliehkraftgewichtes, welches in radialer Richtung verschiebbar und (bevorzugt) federbelastet im Gehäuse des Entgratwerkzeuges angeordnet ist, als auch die Anordnung von mehr als einem Fliehkraftgewicht, insbesondere zwei oder mehreren Fliehkraftgewichten, die jeweils für sich radial verschiebbar geführt im Entgratwerkzeug angeordnet sind.

Soweit lediglich ein radial verschiebbares und axial federbelastetes Fliehkraftgewicht verwendet wird, muß ein entsprechender Massenausgleich verwendet werden, um das Entgratwerkzeug auszuwuchten. Ein derartiger Massenausgleich kann aus einem gegenüberliegenden Auswuchtgewicht bestehen, welches zu Auswuchtzwecken ebenfalls radial und spiegelbildlich zu dem erstgenannten Fliehkraftgewicht im Gehäuse des Entgratwerkzeuges angeordnet sein kann, welches aber nicht notwendigerweise den Drehantrieb der Wippe übernimmt.

Es reicht also aus, daß der Drehantrieb der Wippe lediglich durch ein einziges Fliehkraftgewicht ausgeführt wird.

Der Einfachheit halber wird jedoch in der weiteren Beschreibung davon ausgegangen, daß zwei einander gegenüberliegende und spiegelbildlich zur Längsmittenachse angeordnete Fliehkraftgewichte vorhanden sind, von denen jedes Fliehkraftgewicht an einem gemeinsamen Ritzel kämmt, welches Ritzel drehfest mit der Wippe verbunden ist.

Auf diese Weise wird das Entgratwerkzeug günstig ausgewuchtet und es erfolgt ein symmetrischer Drehantrieb des Ritzels über die einander gegenüberliegenden und zueinander parallel angeordneten Zahnstangen des jeweiligen Fliehkraftgewichtes.

Hierbei wird es bevorzugt, wenn durch eine entsprechende Rückstellfeder die beiden Fliehkraftgewichte im Stillstand des Werkzeuges gegeneinander gepreßt sind und sich im wesentlichen in der Längsmittenebene angeordneten Trennebene berühren. Wird z.B. das Entgratwerkzeug nun rechtsdrehend angetrieben, wobei der Drehantrieb unmittelbar am Gehäuse ansetzt, dann wirkt die Fliehkraft auf beide Fliehkraftgewichte, die somit in radialer Richtung auswärts von der Längsmittenachse verschoben werden und einen gegenseitigen Abstand zueinander einnehmen. Gleichzeitig entfernen sich die beiden Zahnstangen voneinander und treiben so das zwischen beide Zahnstangen aufgenommene Ritzel an, welches drehfest mit der Wippe drehbar in der Längmittenachse des Entgratwerkzeuges gelagert ist. Die Wippe wird hierdurch gedreht und nachdem die Wippe mit einem zugeordneten Betätigungsstift exzentrisch an dem Messer ansetzt, wird das Messer somit aus dem Schaft des Entgratwerkzeuges herausgefahren.

Der Eingriff des Betätigungsstiftes am Messer ist so gewählt, daß das Messer im ausgefahrenen Zustand in Bezug zum Betätigungsstift arretiert, d.h. es ist selbsthemmend in Bezug auf seine Verschiebekraft ausgebildet. Die Drehzahl des Entgratwerkzeuges wird hierbei so gewählt, daß mit Sicherheit dafür gesorgt ist, daß die Fliehkraftgewichte radial auswärts im Gehäuse verschoben bleiben und sich an der Wandung des Gehäuses anlegen, wodurch also die Wippe stets in ihrer der Ausfahrposition entsprechenden Drehlage gehalten wird.

Erst wenn das Werkzeug unterhalb einer bestimmten Drehzahl betrieben wird, überwiegt die Kraft der Rückstellfeder, welche jedes Fliehkraftgewicht in Richtung radial einwärts vorspannt und drückt das jeweilige Fliehkraftgewicht wieder zurück, wodurch die Wippe in Gegenrichtung gedreht wird und das Messer in den Schaft des Entgratwerkzeuges wieder zurückfährt.

In einer ersten Ausführungsform der Erfindung ist es deshalb nicht vorgesehen, daß das Ausfahren des Messers proportional zum Verschiebeweg der Fliehkraftgewichte im Gehäuse ausgebildet ist. Es ist vielmehr vorgesehen, daß das Messer entweder ganz ausgefahren oder ganz eingefahren ist.

In einer zweiten Ausführungsform der Erfindung kann es vorgesehen sein, daß das Ausfahren des Messers proportional zum Verschiebeweg der Fliehkraftgewichte erfolgt, wodurch der Messerverschiebeweg in Abhängigkeit von der Drehzahl des Entgratwerkzeuges gewählt werden kann. Auf diese Weise können drehzahlabhängig gesteuert unterschiedliche Entgratdurchmesser gewählt werden.

Mit der vorliegenden Erfindung wird im übrigen eine sog. Schnellwechselvorrichtung für Messer als erfinderisch beansprucht, die sowohl für sich allein genommen erfinderisch sein soll, als auch in Kombination mit den vorher genannten Merkmalen des Fliehkraftantriebes Schutz genießen soll.

Die Schnellwechselvorrichtung für das oder die Messer des Entgratwerkzeuges beruht darauf, daß die Wippe, welche mit ihrem Betätigungsstift in das jeweilige Messer eingreift, axial verschiebbar und federbelastet im Gehäuse des Entgratwerkzeuges gelagert ist. Mit einer entsprechenden axialen Verschiebung der Wippe kann somit entgegen der Federkraft, welche auf die Wippe wirkt, der Betätigungsstift außer Eingriff mit dem zugeordneten Messer gebracht werden und damit kann das Messer einfach aus seiner Führungsausnehmung am Schaft des Entgratwerkzeuges herausgenommen und gegen ein anderes Messer ersetzt werden. Die Ausbildung der axialen Verschiebelagerung der Wippe funktioniert auch unabhängig von der Art des Drehantriebes der Wippe. Dies bedeutet, es ist hierbei gleichgültig, ob die Wippe von einem Fliehkraftantrieb angetrieben wird oder von einem anderen Drehantrieb, z.B. auch in der Art, wie er im Stand der Technik in Verbindung mit der Steuerstange beschrieben wurde.

Die vorliegende Erfindung beansprucht also eine direkte und axial unverschiebliche Verbindung zwischen dem Ritzel und der Wippe in einer ersten Ausführungsform und - in einer zweiten Ausführungsform - eine Drehkupplung zwischen dem Ritzel und der Wippe, welche in der Lage ist, Verdrehkräfte formschlüssig zu übertragen, die aber der Wippe ein federbelastetes, axiales Bewegungsspiel zuordnet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

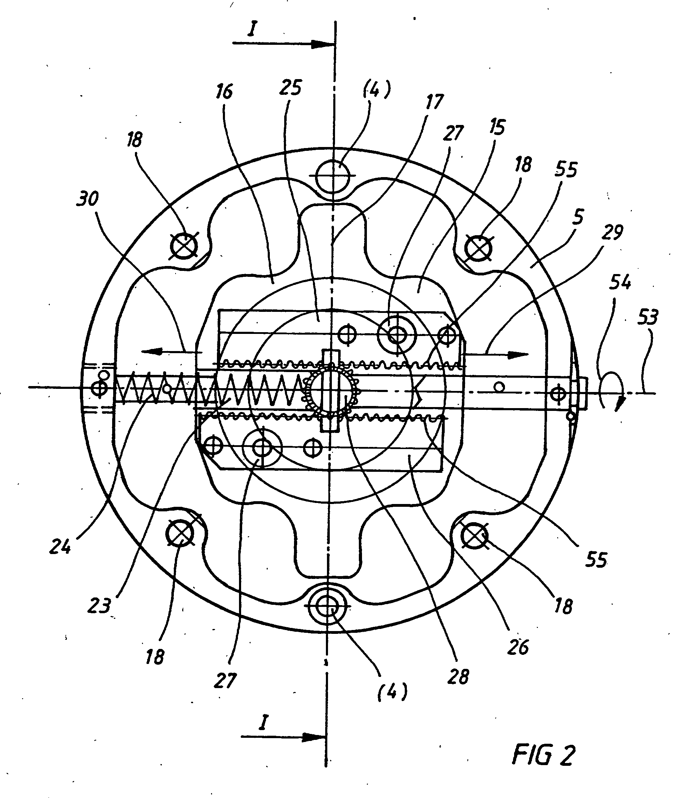

- Figur 1:: Schnitt durch ein Senk- und Entgratwerkzeug nach der Erfindung in Richtung der Linie I - I in Figur 2;
- Figur 2:: Mittenquerschnitt durch das Senk- und Entgratwerkzeug nach Figur 1;
- Figur 3:: eine dem Schnitt nach Figur 2 entsprechende Darstellung mit ausgefahrenen Fliehkraftgewichten;
- Figur 4:: ein Schnitt durch die Messerführung im ausgefahrenen Zustand;
- Figur 5:: ein Schnitt nach Figur 4 im eingefahrenen Zustand;
- Figur 6:: eine alternative Ausführungsform mit zwei Messern.

Ein nicht näher dargestellter Drehantrieb greift am Schaft 2 des Entgratwerkzeuges an, welches das Entgratwerkzeug um die Drehachse 53 beispielsweise in Pfeilrichtung 54 antreibt.

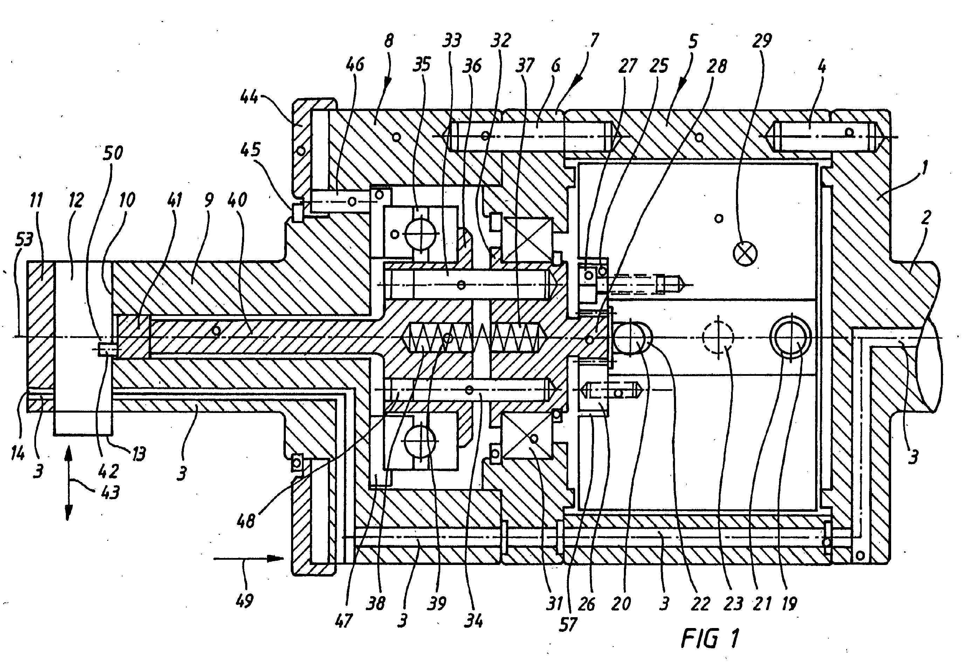

Der Schaft ist werkstoffeinstückig mit einem Gehäusedeckel 1 verbunden, der mittels Stiften 4 und nicht näher dargestellten Schrauben in Gewindebohrungen 18 an der Stirnseite des Gehäuseoberteils 5 befestigt wird. Durch den Schaft 2 ist ein Kühlmittelkanal 3 geführt, welcher sich entsprechend der Darstellung in Figur 1 durch das gesamte Werkzeug erstreckt und in einem Kühlmittelaustritt 14 an der Stirnseite des Schaftdeckels 11 mündet.

In dem Gehäuseoberteil 5 sind zwei einander gegenüberliegende und spiegelsymmetrisch zur Trennebene 10 ausgebildete Fliehkraftgewichte 15,16 angeordnet, welche im Querschnitt etwa hut-förmig ausgebildet sind und deren Stirnseiten sich im eingefahrenen Zustand in der Trennebene 17 berühren. Jedes Fliehkraftgewicht 15,16 ist radial verschiebbar auf zwei zueinander beabstandet und parallel zueinander angeordneten Führungsbolzen 19,20 gelagert, wobei der obere Führungsbolzen 19 in einer zylindrischen Bohrung 21 angeordnet ist, während der untere Führungsbolzen 20 mit Spiel in einer etwa langlochförmigen Spielausnehmung 22 angeordnet ist, um eine leichte radiale Verschiebbarkeit der Fliehkraftgewichte 15,16 auf diesen beiden Führungsbolzen 19,20 zu gewährleisten.

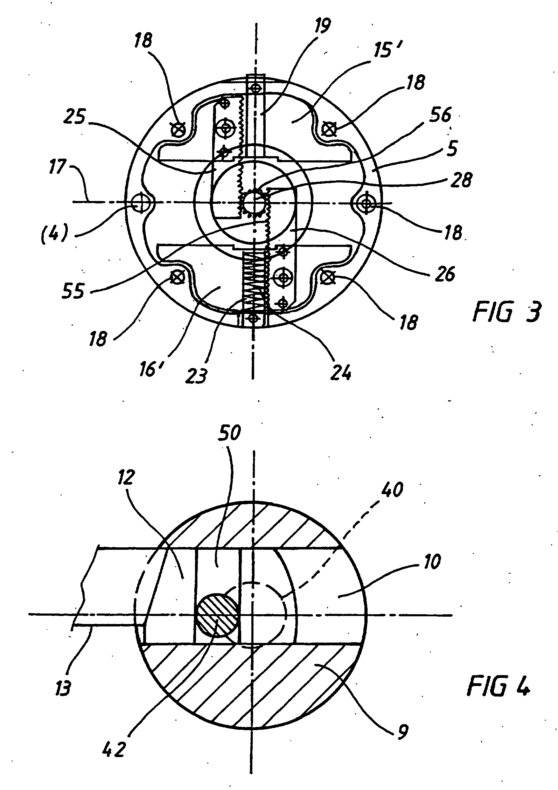

Jedes Fliehkraftgewicht ist entsprechend Figur 3 mit zugeordneten Schrauben mit jeweils einer Zahnstange 25,26 verbunden, wobei jede Zahnstange 25,26 eine einwärts gerichtete Verzahnung 55 aufweist und beide Verzahnungen parallel und in gegenseitigem Abstand so zueinander angeordnet sind, daß dazwischen ein Ritzel 28 aufgenommen ist, welches mit seiner Außenverzahnung mit der jeweiligen Verzahnung 55 der Zahnstangen 25,26 kämmt.

In jedem Fliehkraftgewicht 15,16 ist etwa mittig noch eine oder mehrere Ausnehmung 23 angeordnet, die als Sackbohrung ausgebildet sind und in welche eine oder mehrere Rückstellfeder 24 eingreift, die sich mit ihrem gegenüberliegenden Ende an der Innenwand des Gehäuseoberteils 5 abstützt.

Die Schrauben, welche die Zahnstangen mit den Fliehkraftgewichten verbinden, sind hierbei mit 27 bezeichnet.

Dem Fliehkraftgewicht 15 ist die Zahnstange 25 zugeordnet, während dem Fliehkraftgewicht (16) die Zahnstange 26 zugeordnet ist. Beide Zahnstangen ragen gemäß Figur 3 mit ihren vorderen freien Enden jeweils auf das gegenüber liegende Fliehkraftgewicht und tauchen dort in jeweils eine Nut 57 ein, so daß sich die beiden Fliehkraftgewichte mit ihren einander zugewandten Stirnseiten im eingefahrenen Zustand im Bereich der Trennebene 17 berühren können.

Das Gehäuseoberteil 5 ist mittels Stiften 6 mit einem Lagergehäuse 7 verbunden, welches das dort drehbar gelagerte Ritzel 28 aufnimmt, welches in einem Drehlager 31 in diesem Lagergehäuse 7 drehbar gelagert ist.

Die Stifte 6 und nicht näher dargestellte Schrauben verbinden das Lagergehäuse 7 mit einem sich daran anschließenden Messergehäuse 8, in dem das Drehlager und das axiale Verschiebelager für die Wippe 36 aufgenommen ist. Das Messergehäuse 8 ist werkstoffeinstückig mit dem Gehäuseschaft 9 verbunden, welcher in seinem Durchmesser vermindert gegenüber dem Messergehäuse 8 ausgebildet ist und der nach vorne durch einen Schaftdeckel 11 abgeschlossen ist. Dieser Gehäuseschaft 9 wird quer von einer Ausnehmung 10 durchsetzt, in welcher ein Messer 12 in den Pfeilrichtungen 43 verschiebbar angeordnet ist.

Das Messer 12 weist hierbei ein oder mehrere Schneidkanten 13 auf, welche geeignet sind, sich an einem entsprechenden Bohrungsrand anzulegen und den Bohrungsrand einer Senkbohrung, einer Durchgangsbohrung oder eine Senkbohrung selbst sowohl von der Vorderseite her als ebenfalls auch von der Rückseite her zu entgraten oder herzustellen.

Der Verschiebeantrieb des Messers 12 erfolgt hierbei über die Verdrehung der Wippe 36, die bevorzugt werkstoffeinstückig mit dem Wippenschaft 40 verbunden ist, der wiederum bevorzugt werkstoffeinstückig mit einem Lagerkörper 41 größeren Durchmessers verbunden ist, so daß dieser Lagerkörper 41 als Gleitlager die Drehlagerung der Wippe 36 im Gehäuseschaft 9 übernimmt, während das obere Ende der Wippe 36 in einem Axiallager 35 aufgenommen ist, so daß damit die Wippe 36 in Bezug zum Gehäuseschaft 9 drehbar über die Lager 35,41 gelagert ist.

Wenn jetzt die gesondert beanspruchte Schnellwechselvorrichtung nicht vorhanden wäre, dann wäre die Wippe 36 unmittelbar und unverschieblich mit dem Ritzel verbunden. Dieses besteht aus dem eigentlichen Ritzel 28, welches werkstoffeinstückig mit einem Ritzelkörper 32 verbunden ist, der - wie beschrieben - in dem Drehlager 31 aufgenommen ist. Eine Verdrehung des Ritzels 28 beispielsweise in Pfeilrichtung 54 um die Drehachse 53 herum führt dann unmittelbar zu einer gleichen Verdrehung der Wippe 36, die damit den Betätigungsstift 42 verdreht, welcher in eine Ausnehmung 50 im Messer 12 eingreift und dieses dann beispielsweise in Pfeilrichtung 43 radial aus der Ausnehmung 10 im Gehäuseschaft 9 herausschiebt.

Der Drehantrieb erfolgt nun dergestalt, daß gemäß Figur 3 bei links- oder rechtsdrehend angetriebenem Werkzeug mit zunehmender Drehzahl die Fliehkraftgewichte 15, 16 sich in ihrer Stellung 15',16' radial auswärts bewegen und sich an der Gehäuseinnenwandung des Gehäuseoberteils 15 anlegen, wobei gleichzeitig die beiden gegenüberliegenden Zahnstangen 25,26 das Ritzel 28 im Uhrzeigersinn drehend antreiben. Damit wird die Wippe über die Drehkupplung bestehend aus den Stiften 33,34 ebenfalls drehend angetrieben und das Messer wird in Pfeilrichtung 43 aus dem Gehäuseschaft 9 herausgeschoben.

Gleichzeitig wird mit der radialen Auswärtsverschiebung der Fliehkraftgewichte 15,16 gemäß Figur 3 die jeweilige Rückstellfeder 24 vorgespannt. Sobald die Drehzahl des Drehantriebes eine gewisse Drehzahl unterschreitet, wird somit die Rückstellkraft der jeweiligen Rückstellfeder 24 größer als die Fliehkraft, welche auf die Fliehkraftgewichte 15,16 in entgegengesetzter Richtung wirkt, so daß die Fliehkraftgewichte entgegengesetzt den eingezeichneten Pfeilrichtungen 29,30 wieder aus Ihrer ausgefahrenen Stellung nach Figur 3 einwärts fahren.

Im folgenden wird nun die Messer-Schnellwechselvorrichtung näher beschrieben. Sie beruht im wesentlichen darauf, daß die Wippe 36 zusammen mit ihrem Wippenschaft 40 in axialer Richtung federbelastet verschiebbar im Gehäuse geführt ist. Hierzu sind in der Wippe 36 und dem gegenüberliegenden Ritzelkörper 32 zueinander fluchtende Ausnehmungen 37,38 vorgesehen, in denen eine Rückstellfeder 39 angeordnet ist, die sich am Grund der jeweiligen Ausnehmung abstützt.

Damit wird der Wippenschaft 40 federbelastet vorgespannt und der Betätigungsstift 42 greift somit unter der Kraft der Rückstellfeder 39 in die zugeordnete Ausnehmung 50 am Messer 12 ein.

An der Stirnseite des Messergehäuses 8 ist in axialer Richtung verschiebbar (in Pfeilrichtung 49 und in Gegenrichtung hierzu) eine Druckplatte 44 angeordnet, welche mit in axialer Richtung weisenden Betätigungsstiften 46 verbunden ist, die sich ihrerseits an einer innen liegenden Betätigungsplatte 47 abstützt. Die Betätigungsplatte 47 trägt das Axiallager 35, welches somit insgesamt zusammen mit der Wippe 36 in axialer Richtung verschiebbar ist. Zum Schnellwechsel der Messer wird somit eine Kraft in Pfeilrichtung 49 auf die Druckplatte 44 ausgeübt, die Somit von ihrem Anschlagring 45 abhebt und die Betätigungsplatte 47 und damit auch das Kugellager 35 in Figur 1 nach rechts bewegt. Damit wird ebenfalls die Wippe 36,40 nach rechts bewegt und der Betätigungsstift 42 gerät außer Eingriff mit der Ausnehmung 50 im Messer 12, so daß dieses in Pfeilrichtung 43 aus der Ausnehmung 10 herausfällt. Es kann nun leicht ein anderes Messer eingesetzt werden, wonach nach Entlastung der Druckplatte 44 der Betätigungsstift 42 wiederum in die Ausnehmung 50 des Messer 12 eingreift.

Die Stifte 33,34 als Drehkupplung zwischen dem Ritzelkörper 32 und der Wippe 36 sind mit unterschiedlichem Durchmesser gewählt; um eine Verwechslung der Stifte zu vermeiden. Sie sind einseitig fest im Ritzelkörper 32 eingespannt und haben einen entsprechenden Bewegungsspielraum in Verbindung mit dem Freiraum 48 mit der zugeordneten Längsbohrung in der Wippe 36.

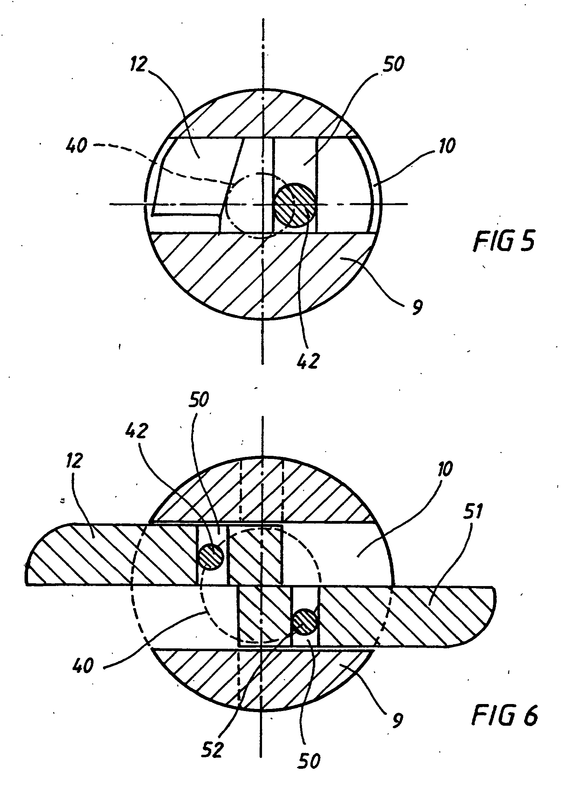

Die Figuren 4 und 5 zeigen einen Schnitt durch den unteren Teil des Wippenschaftes in Höhe der Ausnehmung 10 für das quer gelagerte und radial verschiebbare Messer 12. Es ist erkennbar, daß der Betätigungsstift 42 exzentrisch zur Drehachse der Wippe 36 an der Stirnseite des Wipenschaftes 40 befestigt ist und in eine schlitzförmige Ausnehmung 50 im Messer 12 eingreift. Mit der Verdrehung des Wippenschaftes 40 um die Drehachse 53 wird damit der Betätigungsstift 42 in die in Figur 4 und 5 gezeichneten Drehlager verdreht und damit wird das Messer 12 von seiner ausgefahrenen Stellung nach Figur 3 in die eingefahrene Stellung nach Figur 5 gebracht.

Die ausgefahrene Stellung des Messers 12 nach Figur 4 ist stabil, weil sich der Betätigungsstift 42 so in der Ausnehmung 50 festlegt, daß eine radiale, einwärts gerichtete Kraft an der Schneidkante 13 unmittelbar auf den Mittelpunkt des Betätigungsstiftes 42 wirkt, der stabil in 9-Uhr-Position vor dem Wippenschaft 40 liegt und diese Kraft damit unmittelbar zentrisch auf den Wippenschaft 40 einwirkt, ohne diesen zu verdrehen.

Die Figur 6 zeigt als weitere Variante eine Wippe mit einem Wippenschaft 40 und zwei diametral gegenüberliegenden Betätigungstiften 42,52, von denen jeder einem Messer 12,51 zugeordnet ist.

Mit der Verdrehung der Wippe werden somit beide Messer synchron aus- oder eingefahren. Die Messer-Schnellwechselvorrichtung ist auch auf diese Ausführungsform anwendbar, weil bei axialer Verschiebung der Wippe beide Betätigungsstifte 42,52 außer Eingriff mit den Messern 12,51 gelangen.

### Zeichnungslegende

- 1: Gehäusedeckel
- 2: Schaft
- 3: Kühlmittelkanal
- 4: Stift
- 5: Gehäuseoberteil
- 6: Stift
- 7: Lagergehäuse
- 8: Messergehäuse
- 9: Gehäuseschaft
- 10: Ausnehmung
- 11: Schaftdeckel
- 12: Messer
- 13: Schneidkante
- 14: Kühlmittelaustritt
- 15: Fliehkraftgewicht
- 16: Fliehkraftgewicht
- 17: Trennebene
- 18: Gewindebohrung
- 19: Führungsbolzen
- 20: Führungsbolzen
- 21: Bohrung
- 22: Spielausnehmung
- 23: Ausnehmung für Rückstellfeder
- 24: Rückstellfeder
- 25: Zahnstange
- 26: Zahnstange
- 27: Schraube
- 28: Ritzel
- 29: Pfeilrichtung
- 30: Pfeilrichtung
- 31: Drehlager
- 32: Ritzelkörper
- 33: Stift
- 34: Stift
- 35: Kugellager
- 36: Wippe
- 37: Ausnehmung
- 38: Ausnehmung
- 39: Rückstellfeder
- 40: Wippenschaft
- 41: Lagerkörper
- 42: Betätigungsstift
- 43: Pfeilrichtung
- 44: Druckplatte
- 45: Anschlagring
- 46: Betätigungsstift
- 47: Betätigunsstift
- 48: Freiraum
- 49: Pfeilrichtung
- 50: Ausnehmung
- 51: Messer
- 52: Betätigunsstift
- 53: Drehachse
- 54: Pfeilrichtung
- 55: Verzahnung
- 56: Außenverzahnung
- 57: Nut

## Patentansprüche

1. Senk- und Entgratwerkzeug zum Entgraten,Anfasen und Formsenken von Senk- und Durchgangsbohrungen mit einem drehend angetriebenen Gehäuse (1,2,7,8,9) und mindestens einem, in einem Gehäuseschaft (9) senkrecht zur Drehachse des Gehäuses verschiebbaren Messer (12), wobei bei stillstehendem oder langsamdrehende Werkzeugen das Messer in den Gehäuseschaft (9) eingefahren und bei bestimmt hoher Drehzahl aus dem Gehäuseschaft ausgefahren ist, und der Verschiebeantrieb für das Messer (12) aus einer drehbar im Gehäuse gelagerten und dreh-angetriebenen Wippe (36) besteht, die mit mindestens einem Betätigungsstift (42) an dem Messer (12) angreift, **dadurch gekennzeichnet, daß** der Drehantrieb der Wippe (36) aus mindestens einem im Gehäuse diametral verschiebbar angeordneten Fliehkraftgewicht (15,16) besteht, dessen diametrale Verschiebung im Gehäuse über eine formschlüssige Führung (25,26; 28) in eine Drehbewegung auf die Wippe (36) umgesetzt wird.

2. Senk- und Entgratwerkzeug nach Anspruch 1, **dadurch gekennzeichnet, daß** zwei einander bezüglich einer mittigen Trennebene (17) spiegelbildliche Fliehkraftgewichte (15,16) jeweils im Gehäuse diametral verschiebbar angeordnet sind.

3. Senk- undEntgratwerkzeug nach Anspruch 2, **dadurch gekennzeichnet, daß** jedes Fliehkraftgewicht (15,16) mit jeweils einer Zahnstange (25,26) verbunden ist und beide Zahnstangen mit einem Ritzel (28) kämmen, welches drehfest mit der Wippe (36) verbunden ist.

4. Senk- und Entgratwerkzeug nach einem der Ansprüche 2 oder 3, **dadurch gekennzeichnet, daß** jedes Fliehkraftgewicht (15,16) auf senkrecht zur Gehäuse-Längs-Mittenebene angeordneten Führungsbolzen (19) verschiebbar angeordnet ist und sich federbelastet (24) an der Gehäusewand abstützt.

5. Senk- und Entgratwerkzeug nach einem der Ansprüche 1 - 4, **dadurch gekennzeichnet, dass** zum Schnellwechsel des oder der Messer (12) die Wippe (8,40,41) axial verschiebbar im Gehäuse gelagert ist und dass damit der Betätigungsstift (42) der Wippe (8,40,41) ausser Eingriff mit einer Ausnehmung (50) im Messer (12) bringbar ist.

6. Senk- und Entgratwerkzeug nach Anspruch 5, **dadurch gekennzeichnet, dass** an der Stirnseite des Messergehäuses (8) eine zur Drehachse des Werkzeuges axial verschiebbare Druckplatte (44) angeordnet ist, welche die Wippe (36) über mindestens einen, axial gerichteten Betätigungsstift (46) entgegen der Kraft einer Rückstellfeder (39 im Messergehäuse (8) verschiebt.

7. Senk- und Entgratwerkzeug nach einem der Ansprüche 1 - 6, **dadurch gekennzeichnet, dass** zwei zueinander parallele und nebeneinander angeordnete Messer (12,51) vorhanden sind, die jeweils von einem Betätigungsstift (42,52) der Wippe (8,40,41) gegeneinander verschiebbar angetrieben sind.

8. Senk- und Entgratwerkzeug nach einem der Ansprüche 1 - 7, **dadurch gekennzeichnet, dass** eine die Drehkraft übertragende, jedoch axial verschiebbare Kupplung (33,34,48) zwischen dem Ritzel (28,32) und der Wippe (36) angeordnet ist.

## Claims

1. Countersinking and deburring tool for the deburring, chamfering and countersinking of countersunk holes and through-holes with a rotatably driven housing (1, 2, 7, 8, 9) and at least one blade (12) which can be displaced in a housing shaft (9) perpendicularly to the rotational axis of the housing, the blade being retracted into the housing shaft (9) when the tools are stationary or rotating slowly and being extended out of the housing shaft at a specific high rotational speed, and the displacement drive for the blade (12) consisting of a rocker (36), which is rotatably mounted in the housing and rotatably driven, which rocker engages on the blade (12) with at least one actuation pin (42), **characterised in that** the rotational drive of the rocker (36) consists of at least one centrifugal weight (15, 16) which is arranged so as to be diametrically displaceable in the housing, the diametrical displacement of which in the housing is converted by means of a positive guide (25, 26; 28) into a rotational movement onto the rocker (36).

2. Countersinking and deburring tool according to claim 1, **characterised in that** two centrifugal weights (15, 16) which are mirror-inverted with respect to one another in relation to a central parting plane (17) are arranged so as to be diametrically displaceable, in each case, in the housing.

3. Countersinking and deburring tool according to claim 2, **characterised in that** each centrifugal weight (15, 16) is connected to a respective rack (25, 26) and the two racks mesh with a pinion (28), which is connected to the rocker (36) so as to be resistant to rotation.

4. Countersinking and deburring tool according to either of claims 2 or 3, **characterised in that** each centrifugal weight (15, 16) is displaceably arranged on guide bolts (19) arranged perpendicularly to the longitudinal centre plane of the housing and is supported in a spring-loaded manner (24) on the housing wall.

5. Countersinking and deburring tool according to any one of claims 1 to 4, **characterised in that** for a rapid change of the blade or blades (12), the rocker (8, 40, 41) is axially displaceably mounted in the housing and **in that** the actuation pin (42) of the rocker (8, 40, 41) can thus be disengaged from a recess (50) in the blade (12).

6. Countersinking and deburring tool according to claim 5, **characterised in that** a pressure plate (44) which can be axially displaced with respect to the rotational axis of the tool is arranged on the end face of the blade housing (8), which pressure plate displaces the rocker (36) by means of at least one, axially directed actuation pin (46) against the force of a return spring (39) in the blade housing (8).

7. Countersinking and deburring tool according to any one of claims 1 to 6, **characterised in that** two blades (12, 51) arranged parallel to one another and next to one another are present which can be displaceably driven against one another in each case by an actuation pin (42, 52) of the rocker (8, 40, 41).

8. Countersinking and deburring tool according to any one of claims 1 to 7, **characterised in that** a coupling (33, 34, 48) which transmits the torsional force but can be axially displaced is arranged between the pinion (28, 32) and the rocker (36).

## Revendications

1. Outil d'ébavurage et de chanfreinage pour ébavurer, chanfreiner et lamer des alésages fraisés et débouchants, lequel outil comporte un corps entraîné en rotation (1, 2, 7, 8, 9) et au moins une lame (12) déplaçable dans une tige de corps (9) perpendiculairement à l'axe de rotation du corps, la lame étant rentrée dans la tige de corps lorsque l'outil est immobile ou tourne lentement, et étant sortie de la tige de corps lorsque la vitesse de rotation atteint une certaine valeur élevée, et l'entraînement du déplacement pour la lame (12) étant constitué d'une bascule (36) qui est logée de manière rotative dans le corps et entraînée en rotation et qui est en prise avec la lame (12) par au moins une tige d'actionnement (42), **caractérisé par le fait que** l'entraînement en rotation de la bascule (36) est constitué d'au moins un poids centrifuge (15, 16) qui est agencé déplaçable diamétralement dans le corps et dont le déplacement diamétral dans le corps est converti en un mouvement de rotation sur la bascule (36) par l'intermédiaire d'un guide assemblé par concordance de forme (25, 26 ; 28).

2. Outil d'ébavurage et de chanfreinage selon la revendication 1, **caractérisé par le fait que** deux poids centrifuges (15, 16) symétriques l'un de l'autre par rapport à un plan de coupe médian (17) sont agencés de manière à être chacun déplaçable diamétralement dans le corps.

3. Outil d'ébavurage et de chanfreinage selon la revendication 2, **caractérisé par le fait que** chaque poids centrifuge (15, 16) est relié à une crémaillère respective (25, 26) et que les deux crémaillères s'engrènent avec un pignon (28) qui est assemblé de manière solidaire en rotation, à la bascule (36).

4. Outil d'ébavurage et de chanfreinage selon l'une des revendications 2 ou 3, **caractérisé par le fait que** chaque poids centrifuge (15, 16) est déplaçable sur un boulon-guide (19) agencé perpendiculairement au plan médian longitudinal du corps et s'appuie à la paroi de corps sous une contrainte de ressort (24).

5. Outil d'ébavurage et de chanfreinage selon l'une des revendications 1 à 4, **caractérisé par le fait que**, pour le changement rapide de la ou des lames (12), la bascule (8, 40, 41) est logée de manière déplaçable axialement dans le corps et la tige d'actionnement (42) de la bascule (8, 40, 41) peut ainsi être dégagée avec un évidement (50) dans la lame (12).

6. Outil d'ébavurage et de chanfreinage selon la revendication 5, **caractérisé par le fait qu'**une plaque de pression (44), déplaçable axialement par rapport à l'axe de rotation de l'outil, est agencée sur le côté frontal du corps de lame (8) et déplace la bascule (36) contre la force d'un ressort de rappel (39) dans le corps de lame (8) par le biais d'au moins une tige d'actionnement (46) dirigée axialement.

7. Outil d'ébavurage et de chanfreinage selon l'une des revendications 1 à 6, **caractérisé par le fait qu'**il y a deux lames (12, 51) qui sont agencées parallèles l'une à l'autre et l'une à côté de l'autre et qui sont entraînées de manière déplaçable l'une à l'encontre de l'autre à chaque fois par une tige d'actionnement (42, 52) de la bascule (8, 40, 41).

8. Outil d'ébavurage et de chanfreinage selon l'une des revendications 1 à 7, **caractérisé par le fait qu'**un embrayage (33, 34, 48) transmettant la force de rotation, mais déplaçable axialement, est prévu entre le pignon (28, 32) et la bascule (36).
